# EUROPÄISCHE PATENTSCHRIFT

(11) **EP 3 336 487 B1**
(45) Veröffentlichungstag und Bekanntmachung des Hinweises auf die Patenterteilung: **10.09.2025**
(21) Anmeldenummer: 17201607.3
(22) Anmeldetag: 14.11.2017
(51) Int. Cl.: G01C 15/00, G01S 17/08, G01S 7/51, G01S 17/86

(54) **VERFAHREN ZUM BETRIEB EINES LASERENTFERNUNGSMESSGERÄTS**
METHOD FOR OPERATING A LASER RANGE-FINDER
PROCÉDÉ DE FONCTIONNEMENT D'UN DISPOSITIF DE MESURE DE DISTANCE LASER

(30) Priorität: 16.12.2016 DE 102016225275
(43) Veröffentlichungstag der Anmeldung: 20.06.2018
(73) Patentinhaber: Robert Bosch GmbH, 70442 Stuttgart (DE)
(72) Erfinder: Noe, Stefan, 70563 Stuttgart (DE); Wieland, Christoph, 70563 Stuttgart (DE)

(56) Entgegenhaltungen:
- EP-A1- 2 051 102
- EP-A2- 2 918 972
- DE-A1- 102006 013 707
- DE-A1- 102011 003 495
- US-A1- 2016 069 678

## Beschreibung

### Stand der Technik

Die vorliegende Erfindung betrifft ein Verfahren zum Betrieb eines handgehaltenen Laserentfernungsmessgeräts.

Es sind bereits Verfahren zum Betrieb von handgehaltenen Laserentfernungsmessgeräten vorgeschlagen worden, beispielsweise in DE 10 2012 214 880 A1 oder in EP 2669707 A1.

Aus der DE 10 2011 003 495 A1 ist ein System mit einer Messschiene und einem Messgerät bekannt, das zumindest eine Recheneinheit, ein Neigungsmessmittel und ein elektronisches Entfernungsmessmittel aufweist.

Die EP 2 051 102 A1 beschreibt ein elektro-optisches Messgerät mit mindestens einem Messgerätgehäuse, einem optischen Sendepfad, der zumindest einen optischen Sender zur Aussendung eines Messsignals aufweist, einem Empfangspfad mit zumindest einer Empfangsoptik zur Bündelung eines Messsignals in Richtung auf einen Empfänger, sowie mit einem Komponenten von Sende- und Empfangspfad aufnehmenden Optik-Trägerkörper mit einer optischen Achse.

### Offenbarung der Erfindung

Es wird ein Verfahren gemäß Anspruch 1 zum Betrieb eines handgehaltenen Laserentfernungsmessgeräts zur berührungslosen Entfernungsmessung zwischen dem Laserentfernungsmessgerät und einem entfernten Gegenstand vorgeschlagen. Das Verfahren geht aus von einem handgehaltenen Laserentfernungsmessgerät mit einem Gehäuse, bei dem zumindest mit einer Laserentfernungsmesseinheit des Laserentfernungsmessgeräts eine Entfernung zu einem Zielpunkt durch Aussenden eines Laserstrahls ermittelbar ist und bei dem mit einem Beschleunigungssensor eine Neigung ermittelbar ist.

"Handgehalten" bedeutet, dass das Laserentfernungsmessgerät bei einem Messvorgang von einem Bediener mit der Hand zumindest geführt, vorzugsweise getragen, besonders bevorzugt gehalten zu werden. Dazu beträgt die Gesamtmasse des Laserentfernungsmessgeräts insbesondere weniger als 2 kg, bevorzugt weniger als 1 kg, besonders bevorzugt weniger als 500 g. Ferner können in einer Ausführungsform des Laserentfernungsmessgeräts alle Komponenten des Laserentfernungsmessgeräts in einem die Komponenten im Wesentlichen umschließenden Gehäuse untergebracht. Insbesondere beträgt die Länge der längsten Seite dieses Gehäuses weniger als 30 cm, vorteilhaft weniger als 20 cm, besonders vorteilhaft weniger als 15 cm. In einem Anwendungsbeispiel kann das handgehaltene Laserentfernungsmessgerät beispielsweise zur Vermessung von Gegenständen oder Innenräumen bei handwerklichen Tätigkeiten verwendet werden.

Zur Entfernungsmessung weist das handgehaltene Laserentfernungsmessgerät eine Sendevorrichtung zum Aussenden von Laserstrahlung, eine Empfangsoptik zum Empfangen von von einem entfernten Objekt rücklaufender Laserstrahlung sowie zumindest eine Detektorvorrichtung zum Detektieren von empfangener Laserstrahlung sowie eine Auswertevorrichtung auf.

Die Sendevorrichtung des Laserentfernungsmessgeräts zum Aussenden von Laserstrahlung weist zumindest eine Lichtquelle auf, vorzugsweise in Form eines Lasers, eines Halbleiterlasers oder einer Laserdiode, die insbesondere zeitlich moduliertes Licht, bevorzugt Laserstrahlung, in Richtung eines entfernten Objekts aussendet. Eine zeitliche Modulation kann hierbei kontinuierlich und/oder periodisch, beispielsweise sinusartig, erfolgen. Ebenfalls können Lichtpulse in Richtung auf ein Zielobjekt ausgesendet werden. Ferner können auch Pulszüge, beispielsweise nicht-periodisch wie z.B. in Form von sogenannten Pseudo-Noise-Pulsabfolgen, ausgesendet werden. In einer Ausführungsform kann die Laserstrahlung in einem für das menschliche Auge sichtbaren spektralen Wellenlängenbereich, d.h. insbesondere zwischen 380 nm bis 780 nm, liegen. Vorteilhaft kann ein Bediener des Laserentfernungsmessgeräts die von dem Laserentfernungsmessgerät emittierte Laserstrahlung ohne Zuhilfenahme optischer Hilfsmittel erkennen und insbesondere deren Projektion auf das entfernte Objekt als projizierte Lasermarkierung wahrnehmen.

Ein von dem mittels ausgesendetem Laserstrahl beleuchteten Zielobjekt reflektierter und/oder gestreuter, d.h. rücklaufender Laserstrahl wird unter Verwendung einer Empfangsoptik auf die Detektorvorrichtung, insbesondere deren Detektorelement, projiziert, bevorzugt abgebildet. Beispielsweise kann die Empfangsoptik strahlformende und/oder strahllenkende und/oder die Eigenschaften der Laserstrahlung beeinflussende optische Elemente, beispielsweise Linsen, Filter, diffraktive Elemente, Spiegel, Reflektoren, optisch transparente Scheiben oder dergleichen, aufweisen.

Der rücklaufende Laserstrahl wird mittels der Detektorvorrichtung zumindest teilweise detektiert und zur Ermittlung der zu messenden Entfernung verwendet. Dabei soll unter der Detektorvorrichtung zumindest ein strahlungsempflindliches Detektorelement wie beispielsweise eine Photodioden, eine PIN-Diode, eine Avalanche Photo Diode (APD), eine Single-Photon-Avalanche-Diode (SPAD) oder dergleichen, verstanden werden, das abhängig von einer auftreffenden Lichtintensität ein Detektionssignal liefert.

Die "Auswertevorrichtung" weist einen Informationseingang, eine Informationsverarbeitung sowie eine Informationsausgabe auf. In einer Ausführungsform kann die Auswertevorrichtung einen Prozessor sowie in einem Speicher der Auswertevorrichtung gespeicherte Betriebsprogramme und/oder Regelroutinen und/oder Auswerteroutinen und/oder Berechnungsroutinen aufweisen. Die Auswertevorrichtung ist dazu vorgesehen, aus einer Entfernungsmessung mittels der Laserentfernungsmesseinheit eine Entfernung zu ermitteln. Insbesondere kann die Auswertevorrichtung dazu vorgesehen sein, aus einem zwischen der ausgesendeten Laserstrahlung und der von der Oberfläche des Zielobjekts rücklaufenden Laserstrahlung durchgeführten Phasenvergleich eine Lichtlaufzeit zu ermitteln und über die Lichtgeschwindigkeit den gesuchten Abstand zwischen dem Laserentfernungsmessgerät und dem Zielobjekt zu berechnen bzw. zu ermitteln. Ferner ist die Auswertevorrichtung dazu vorgesehen, mittels eines Beschleunigungssensors ermittele Neigungen wahlweise als Neigung einer Referenz des Gehäuses, insbesondere einer Seite des Gehäuses, des Laserentfernungsmessgeräts oder als Neigung des Laserstrahls, insbesondere als Neigung der Emissionsrichtung des Laserstrahls, des Laserentfernungsmessgeräts zu ermitteln.

Ein ermittelter Entfernungsmesswert in Richtung des emittierten Laserstrahls und/oder ein Ergebnis der Berechnung kann von der Auswertevorrichtung des Laserentfernungsmessgeräts weiterverarbeitet und/oder mittels einer Ausgabevorrichtung des Laserentfernungsmessgeräts, beispielsweise unter Verwendung eines Bildschirms, insbesondere eines berührungssensitiven Bildschirms, oder einer akustischen Ausgabevorrichtung, an einen Bediener des Laserentfernungsmessgeräts ausgegeben werden.

Erfindungsgemäß weist das Laserentfernungsmessgerät zumindest einen Beschleunigungssensor und/oder zumindest einen Drehratensensor auf. Prinzipiell können in einer Ausführungsform auch mehrere Beschleunigungssensoren und/oder mehrere Drehratensensoren in dem Laserentfernungsmessgerät vorgesehen sein. Unter Verwendung des zumindest einen Beschleunigungssensors und/oder des zumindest einen Drehratensensors ist das Laserentfernungsmessgerät dazu vorgesehen, eine Neigung des Laserentfernungsmessgeräts zu ermitteln. Unter einer Neigung ist insbesondere eine Achsneigung (oder auch: Achsenneigung, Achsschiefe) zu verstehen, die eine Abweichung einer Achse des Laserentfernungsmessgeräts von der Horizontalen oder der Vertikalen bezeichnet. In einer Ausführungsform des Laserentfernungsmessgeräts erfolgt die Ermittlung der Neigung durch die Auswertevorrichtung, die von dem zumindest einen Beschleunigungssensor und/oder dem zumindest einen Drehratensensor Messsignale zur Auswertung zugeleitet bekommt. Die von einem Beschleunigungssensor ermittelten Messsignale betreffen beispielsweise die Beschleunigung des Laserentfernungsmessgeräts im Schwerkraftfeld der Erde, aus der die Neigung absolut oder relativ ermittelbar ist. Die von einem Drehratensensor ermittelten Messsignale betreffen hingegen die jeweilige Winkelgeschwindigkeit des Laserentfernungsmessgeräts entlang einer Drehachse, aus der sich ebenfalls eine Neigung absolut oder relativ ermitteln lässt.

Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Es sei angemerkt, dass der Begriff "ermittelbar" oder auch "umschaltbar" ausdrückt, dass im Betrieb des Laserentfernungsmessgeräts eine Ermittlung oder Umschaltung auch tatsächlich realisierbar ist.

Es sei angemerkt, dass das Laserentfernungsmessgerät ferner eine Energiequelle, beispielsweise eine Batterie oder einen Akkumulator, sowie Bedienelemente zu dessen Bedienung aufweist.

Das Verfahren zum Betrieb des handgehaltenen Laserentfernungsmessgeräts geht von dem vorgeschlagenen Laserentfernungsmessgerät aus, wobei erfindungsgemäß in einem ersten Betriebsmodus des Laserentfernungsmessgeräts die Neigung einer Referenz des Gehäuses, insbesondere einer Seite des Gehäuses, des Laserentfernungsmessgeräts ermittelt wird und in einem zweiten Betriebsmodus die Neigung des Laserstrahls, zumindest jedoch die Neigung der theoretischen Emissionsrichtung des Laserstrahls im ausgeschalteten Zustand der Laserdiode, des Laserentfernungsmessgeräts ermittelt wird.

Unter "Referenz des Gehäuses" ist insbesondere ein konstruktionsbedingtes Merkmal des Gehäuses zu verstehen, beispielsweise eine Seite des Gehäuses, eine Kante des Gehäuses, eine Referenzfläche, eine Referenzmarkierung oder desgleichen des Gehäuses zu verstehen. Bevorzugt weist die Referenz in zumindest einer Dimension eine Ausdehnung auf. Besonders bevorzugt weist die Referenz in derjenigen Richtung eine Ausdehnung auf, in der die Neigung der Referenz ermittelt wird.

Es sei darauf hingewiesen, dass im Folgenden auch von "Neigung des Laserstrahls" gesprochen wird, wenn kein Laserstrahl emittiert wird, beispielsweise im ausgeschalteten Zustand der Laserdiode des Laserentfernungsmessgeräts. In diesem Fall betrifft die Formulierung die Neigung der theoretischen Emissionsrichtung des Laserstrahls, d.h. diejenige Neigung, die der Laserstrahl im eingeschalteten Zustand hätte.

Im Gegensatz zu aus dem Stand der Technik bekannten Laserentfernungsmessgeräten, bei denen die Neigung des Gerätegehäuses ermittelt wird, erlaubt das erfindungsgemäße Verfahren die Bereitstellung zweier Betriebsmodi, in denen die Ermittlung der Neigung einer Referenz des Gehäuses, insbesondere einer Seite des Gehäuses, des Laserentfernungsmessgeräts ermöglicht wird sowie die Ermittlung der Neigung des Laserstrahls des Laserentfernungsmessgeräts ermöglicht wird.

Üblicherweise wird die Neigung des Geräts zur Horizontalen oder zur Vertikalen angezeigt, beispielsweise unter Ausgabe eines Zahlenwerts, in Form einer digitalen Wasserwaage oder in Form einer Winkelskala. Führt ein Benutzer des Laserentfernungsmessgeräts allerdings indirekte Längenmessungen durch (beispielsweise unter Verwendung zweier ermittelter Entfernungsmesswerte sowie des zwischen den in die beiden Messrichtungen ermittelten Winkels), so kann die Ausgabe eines auf das Gehäuse bezogenen Neigungswerts zu Verwirrung führen, da typischerweise zwischen Referenz des Gehäuses und der Emissionsrichtung des Laserstrahls konstruktionsbedingt ein Winkelunterschied existiert. Dieser Winkelunterschied tritt in Abhängigkeit der Justageprozesse bei der Fertigung des Laserentfernungsmessgeräts in unterschiedlicher Größe auf. In der Fertigung wird daher der Beschleunigungssensor auf die Referenz des Gehäuses kalibriert und die tatsächliche Richtung des Laserstrahls (Winkel von Elevation und Azimut) bezüglich der Referenz bestimmt. Diese Daten werden zur Korrektur von Beschleunigungsmesswerten und/oder Neigungsmesswerten im Laserentfernungsmessgerät gespeichert und somit bereitgehalten.

In Abhängigkeit vom Betriebsmodus wird entweder die Neigung des Geräts, insbesondere im Falle von reinen Winkelmessungen, oder die Neigung des Laserstrahls, insbesondere im Falle von direkten oder indirekten Längenmessungen, angezeigt. Auf diese Weise kann ermöglicht werden, die berechneten Werte stets konsistent und für einen Benutzer des Laserentfernungsmessgeräts nachvollziehbar und verständlich darzustellen. Dem Anwender wird auf diese Weise nicht suggeriert, dass der aus dem Gehäuse des Laserentfernungsmessgeräts emittierte Laserstrahl parallel zu den Gehäusekanten verläuft. Dennoch kann der Benutzer des Laserentfernungsmessgeräts das Laserentfernungsmessgeräts (im Rahmen der spezifizierten Genauigkeit) als Winkelmessgerät oder als Wasserwaage mit horizontalem/vertikalen Strahl einsetzen.

Erfindungsgemäß ist zwischen dem ersten Betriebsmodus und dem zweiten Betriebsmodus umschaltbar.

Erfindungsgemäß ist zwischen dem ersten Betriebsmodus und dem zweiten Betriebsmodus unter Verwendung einer Eingabevorrichtung umschaltbar. Insbesondere kann derart zwischen dem ersten Betriebsmodus und dem zweiten Betriebsmodus manuell durch einen Benutzer des Laserentfernungsmessgeräts gewählt werden. Der Benutzer kann daher die in einer gegebenen Messsituation vorteilhafte Auswertung der Neigung entweder der Referenz des Gehäuses, insbesondere einer Seite des Gehäuses, des Laserentfernungsmessgeräts oder des Laserstrahls des Laserentfernungsmessgeräts wählen. Derart kann ein besonders flexibel bedienbares Laserentfernungsmessgerät realisiert werden.

In einer Ausführungsform des Verfahrens wird der erste Betriebsmodus automatisch ausgewählt, insbesondere von dem zweiten Betriebsmodus in den ersten Betriebsmodus umgeschaltet, wenn ein flächiges Auflegen des Laserentfernungsmessgeräts detektiert wird oder wenn das Aufsetzen des Laserentfernungsmessgeräts auf ein Stativ detektiert wird. Auf diese Weise kann eine besonders nutzerfreundliche Realisierung des Laserentfernungsmessgeräts angegeben werden, bei der der Benutzer des Laserentfernungsmessgeräts keine weitere Wahl zu treffen hat. Ferner kann auf diese Weise eine Verwirrung des Benutzers verhindert werden, indem stets der korrekte Betriebsmodus automatisch gewählt und somit die in einem Messsituation vorteilhafte Auswertung der Neigung entweder der Referenz des Gehäuses, insbesondere einer Seite des Gehäuses, des Laserentfernungsmessgeräts oder des Laserstrahls des Laserentfernungsmessgeräts erfolgt.

Erfindungsgemäß wird die Neigung des Laserentfernungsmessgeräts unter Verwendung einer Ausgabevorrichtung, insbesondere unter Verwendung eines Bildschirms, des Laserentfernungsmessgeräts ausgegeben. Auf diese Weise kann die Neigung unmittelbar von dem Benutzer des Laserentfernungsmessgeräts überprüft und/oder eingestellt werden. Derart kann das Laserentfernungsmessgerät mit der Funktion einer Wasserwaage oder eines Winkelmessers verwendet werden. Ferner kann der Benutzer des Laserentfernungsmessgeräts die aus ermittelten Entfernungen berechneten Werte nachvollziehen, insbesondere auch nachrechnen.

In einer Ausführungsform des Verfahrens wird die Neigung des Laserentfernungsmessgeräts in Form eines Zahlenwerts, einer Winkelskala oder einer digitalen Wasserwaage ausgegeben. Auf diese Weise kann eine besonders intuitiv verständliche Funktionalität des Laserentfernungsmessgeräts bereitgestellt werden, die insbesondere eine Einlernzeit zur ordnungsgemäßen Bedienung des Laserentfernungsmessgeräts minimiert.

Ferner wird ein handgehaltenes Laserentfernungsmessgerät gemäß Anspruch 5 zur Durchführung des erfindungsgemäßen Verfahrens vorgeschlagen. Das handgehaltene Laserentfernungsmessgerät weist zumindest eine Laserentfernungsmesseinheit zum berührungslosen Messen einer Entfernung zu einem Zielpunkt, einen Beschleunigungssensor oder einen Drehratensensor zur Ermittlung einer Neigung und eine Auswertevorrichtung auf, wobei die Auswertevorrichtung dazu vorgesehen ist, aus einer Entfernungsmessung mittels der Laserentfernungsmesseinheit eine Entfernung zu ermitteln sowie eine mittels des Beschleunigungssensors oder des Drehratensensors ermittelte Neigung einer Referenz des Gehäuses, insbesondere einer Seite des Gehäuses, des Laserentfernungsmessgeräts oder des Laserstrahls des Laserentfernungsmessgeräts zu ermitteln.

Erfindungsgemäß weist das Laserentfernungsmessgerät eine Ausgabevorrichtung, insbesondere einen Bildschirm, zur Ausgabe der Neigung auf.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßiger Weise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine perspektivische Ansicht einer Ausgestaltung des erfindungsgemäßen Laserentfernungsmessgeräts,
- Figur 2: eine schematische Darstellung von in einer Ausgestaltung des erfindungsgemäßen Laserentfernungsmessgeräts integrierten Komponenten,
- Figur 3: eine schematische Darstellung einer Ausgestaltung des erfindungsgemäßen Verfahrens in einem Verfahrensdiagramm,
- Figur 4a-e: schematische Seitenansichten einer Ausgestaltung des erfindungsgemäßen Laserentfernungsmessgeräts, das sich in exemplarischen Messszenarien befindet.

### Beschreibung der Ausführungsbeispiele

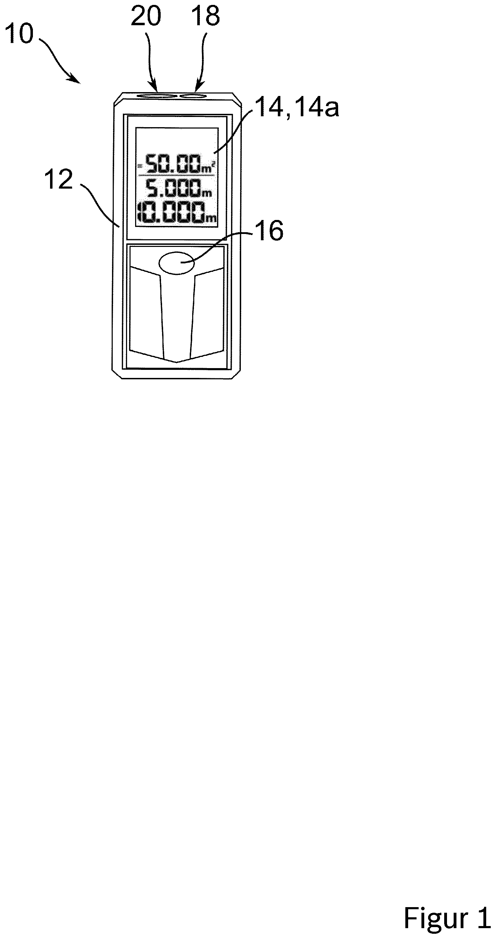

Figur 1 zeigt in perspektivischer Darstellung ein beispielhaft ausgeführtes, handgehaltenes Laserentfernungsmessgerät 10, das ein Gehäuse 12, einen berührungssensitiven Bildschirm 14a als Ein- und Ausgabevorrichtung 14 sowie ein Betätigungselement 16 zum Ein- und Ausschalten des Laserentfernungsmessgeräts 10 und zum Starten und/oder Beenden eines Messvorgangs aufweist. Das handgehalte Laserentfernungsmessgerät 10 wiegt in der dargestellten Ausführung weniger als 500 g, wobei die längste Seite des Gehäuses 12 weniger als 15 cm misst.

Zur Messung des Abstands des Laserentfernungsmessgeräts 10 zu einem Zielobjekt (hier nicht näher dargestellt) wird im Betrieb des Laserentfernungsmessgeräts 10 parallele Laserstrahlung (hier nicht näher dargestellt) über eine Sendeoptik 18, die beispielsweise aus einem nicht näher dargestellten Linsensystem besteht, in Richtung des Zielobjekts gesendet. Die von einer Oberfläche des Zielobjekts reflektierte Laserstrahlung (hier nicht näher dargestellt) wird über eine Empfangsoptik 20 auf eine nicht näher dargestellte Detektorvorrichtung geleitet und dort detektiert. Aus einem zwischen der ausgesendeten Laserstrahlung und der von der Oberfläche des entfernten Gegenstands reflektierten Laserstrahlung durchgeführten Phasenvergleich kann eine Lichtlaufzeit ermittelt und über die Lichtgeschwindigkeit die gesuchte Entfernung zwischen dem Laserentfernungsmessgerät 10 und dem Zielobjekt in der entsprechenden Entfernungsmessrichtung bestimmt werden. Die Laserstrahlung ist in diesem Ausführungsbeispiel als rotes Laserlicht realisiert. Auf dem Zielobjekt erzeugt die emittierte Laserstrahlung einen projizierten Laserpunkt.

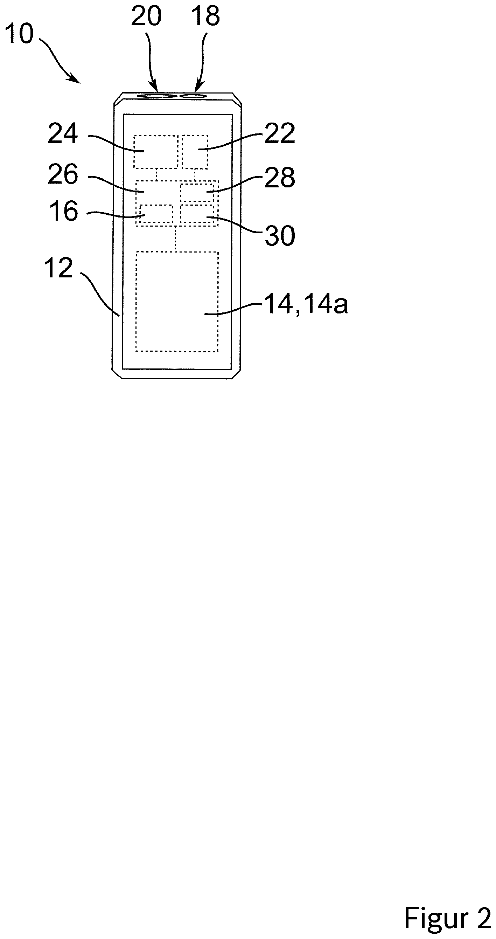

In Figur 2 sind in einer schematischen Ansicht die erfindungswesentlichen inneren Komponenten des handgehaltenen Laserentfernungsmessgeräts dargestellt. Das Laserentfernungsmessgerät 10 weist eine Laserdiode 22 zur Erzeugung der Laserstrahlung, eine Detektorvorrichtung 24, eine Auswertevorrichtung 26, einen Beschleunigungssensor 28 sowie einen Drehratensensor 30 auf. Die Detektorvorrichtung 24 weist in diesem Ausführungsbeispiel zumindest eine Single-Photon-Avalanche-Diode (SPAD), bevorzugt ein SPAD-Array, auf. Die Auswertevorrichtung 26 ist dazu vorgesehen, aus einem zwischen der ausgesendeten Laserstrahlung und der von der Oberfläche des Zielobjekts rücklaufenden Laserstrahlung durchgeführten Phasenvergleich eine Lichtlaufzeit zu ermitteln und über die Lichtgeschwindigkeit den gesuchten Abstand zwischen dem Laserentfernungsmessgerät 10 und dem Zielobjekt zu berechnen bzw. zu ermitteln. Ferner ist die Auswertevorrichtung 26 dazu vorgesehen, mittels eines Beschleunigungssensors 28 ermittelte Neigungswerte wahlweise als Neigung einer Referenz des Gehäuses 12, insbesondere einer Seite des Gehäuses 12, des Laserentfernungsmessgeräts 10 oder als Neigung des Laserstrahls, insbesondere als Neigung der Emissionsrichtung des Laserstrahls, des Laserentfernungsmessgeräts 10 zu ermitteln.

Der Beschleunigungssensor 28 misst in diesem Ausführungsbeispiel zumindest die Beschleunigung in einer Richtung, die der Richtung entspricht, in der der Laserstrahl emittiert wird. Ferner kann ein Drehratensensor 30 in diesem Ausführungsbeispiel die Drehrate um drei senkrecht aufeinander stehende Achsen (kartesisches Koordinatensystem, nicht näher dargestellt) ermitteln. Die Messsignale sowohl des Beschleunigungssensor 28 als auch des Drehratensensor 30 werden zur Auswertung an die Auswertevorrichtung 26 weitergeleitet. Die Auswertevorrichtung wertet die bereitgestellten Signale aus und ermittelt aus ihnen wahlweise eine Neigung 32a einer Referenz des Gehäuses 12, insbesondere einer Seite 34 des Gehäuses 12, oder eine Neigung 32b des Laserstrahls 36, insbesondere die Neigung der Emissionsrichtung des Laserstrahls 36.

Ein ermittelter Entfernungsmesswert kann von der Auswertevorrichtung 26 des Laserentfernungsmessgeräts 10 weiterverarbeitet und/oder mittels der Ausgabevorrichtung 14, insbesondere dem Bildschirm 14a des Laserentfernungsmessgeräts 10, an den Bediener des Laserentfernungsmessgeräts ausgegeben werden.

Das Laserentfernungsmessgerät 10 weist zu dessen Energieversorgung eine nicht näher dargestellte Energieversorgungsvorrichtung, insbesondere eine Batterie oder einen Akkumulator, bevorzugt einen Lithium-Ionen-Akkumulator, auf.

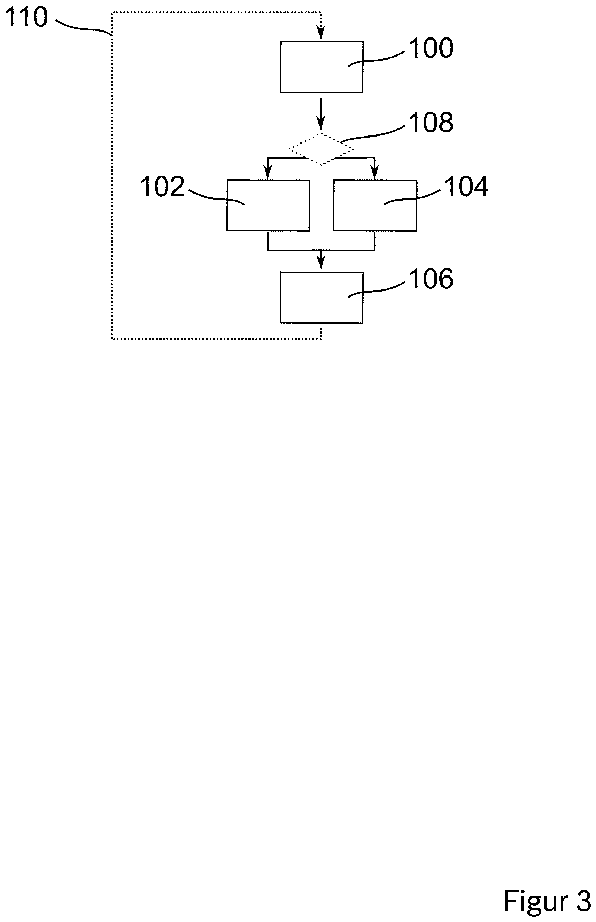

In Figur 3 ist ein Verfahrensdiagramm eines Ausführungsbeispiels des erfindungsgemäßen Verfahrens zum Betrieb des handgehaltenen Laserentfernungsmessgeräts 10 dargestellt. In einem ersten Verfahrensschritt 100 werden die Messsignale des Beschleunigungssensors 28 und/oder des Drehratensensors 30 ausgelesen und an die Auswertevorrichtung 26 weitergeleitet. In einem ersten Betriebsmodus 102 des Laserentfernungsmessgeräts 10 wird anschließend die Neigung 32a einer Referenz des Gehäuses 12, insbesondere einer Seite 34 des Gehäuses 12, aus den von dem Beschleunigungssensor 28 und/oder dem Drehratensensor 30 bereitgestellten Messsignalen ermittelt. In dem zweiten Betriebsmodus 104 des Laserentfernungsmessgeräts 10 wird alternativ die Neigung 32b des Laserstrahls 36 (oder gleichbedeutend die Neigung 32b der Emissionsrichtung des Laserstrahls 36) des Laserentfernungsmessgeräts 10 ermittelt. Anschließend wird das Ergebnis der Auswertung in Verfahrensschritt 106 unter Verwendung der Ein- und Ausgabevorrichtung 14, insbesondere unter Verwendung des Bildschirms 14a, an den Benutzer des Laserentfernungsmessgeräts 10 ausgegeben. Eine Ausgabe kann beispielsweise in Form eines Zahlenwerts, einer Winkelskala oder einer digitalen Wasserwaage 38 erfolgen.

Wie durch den Verfahrensschritt 108 angedeutet, kann zwischen den beiden Betriebsmodi 102 und 104 gewechselt (umgeschaltet) werden. Ein Wechsel kann dabei insbesondere manuell durch den Benutzer unter Verwendung der Ein- und Ausgabevorrichtung 14 des Laserentfernungsmessgeräts 10 initiiert werden. Alternativ kann der Wechsel auch automatisch initiiert werden, beispielsweise wenn ein flächiges Auflegen des Laserentfernungsmessgeräts 10 oder das Aufsetzen des Laserentfernungsmessgeräts 10 auf ein Stativ (nicht näher dargestellt) detektiert wird. Ein gesonderter Sensor zur Detektion eines flächigen Auflegens des Laserentfernungsmessgeräts 10 oder eines Aufsetzens des Laserentfernungsmessgeräts 10 auf ein Stativ kann hierzu vorgesehen sein (nicht näher dargestellt).

Es sei angemerkt, dass die dargestellten Verfahrensschritte wiederholt ablaufen können, wie dies durch den Pfeil 110 in Figur 3 angedeutet ist.

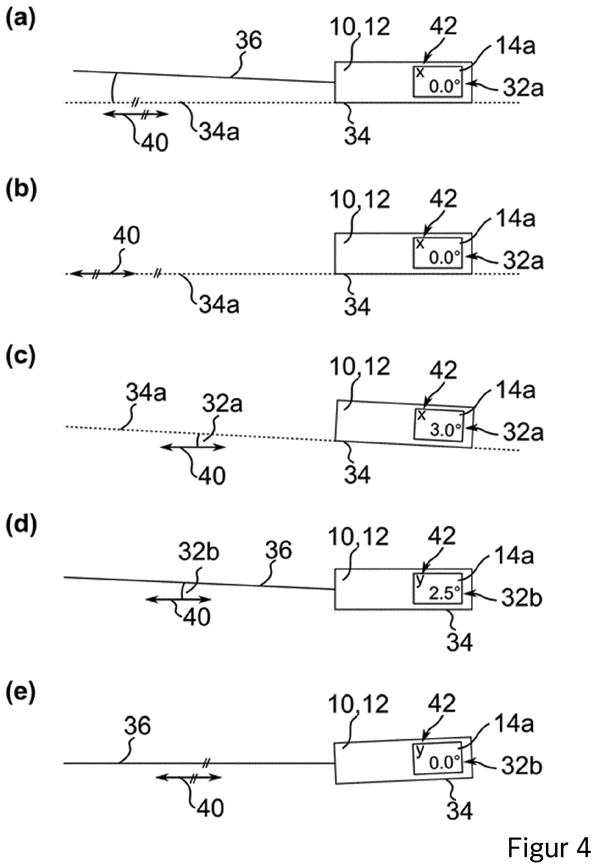

In Figur 4 sind unterschiedliche beispielhafte Messszenarien dargestellt, bei denen das erfindungsgemäße Laserentfernungsmessgerät 10 verwendet wird. Das Laserentfernungsmessgerät 10 ist lediglich schematisch mit einem Gehäuse 12 und einem Bildschirm 14a dargestellt. Figur 4a zeigt in einer Vergleichsdarstellung den geometrischen Zusammenhang zwischen der Referenz des Gehäuses 12, die hier als Seite 34 des Gehäuses 12 gewählt ist, und dem Laserstrahl 36 (oder zumindest dessen theoretischer Emissionsrichtung bei ausgeschalteter Laserdiode). Insbesondere schließen Referenz des Gehäuses 12 und Laserstrahl 36 einen Winkel ein - symbolisiert durch das Winkelsymbol). Während in der Darstellung der emittierte Laserstrahl 36 gegenüber der Horizontalen 40 geneigt ist, liegt die Referenz des Gehäuses 12, hier die Seite 34 des Gehäuses 12, parallel zur Horizontalen 40 - angedeutet durch das "Parallel-Symbol" an der gestrichelten Verlängerung 34a der Seite 34 des Gehäuses 12 und der Horizontalen 40. Dieser Winkelunterschied zwischen der Seite 34 des Gehäuses 12 und der Emissionsrichtung des Laserstrahls 36 ist konstruktionsbedingt und kann in Abhängigkeit der Justageprozesse bei der Fertigung des Laserentfernungsmessgeräts 10 unterschiedliche ausfallen. In der Fertigung wird der Beschleunigungssensor 28 auf die Referenz des Gehäuses 12 kalibriert und die tatsächliche Richtung des Laserstrahls 36 (Winkel von Elevation und Azimut) bezüglich der Referenz bestimmt. Diese Daten werden zur Korrektur von Beschleunigungsmesswerten und/oder Neigungsmesswerten im Laserentfernungsmessgerät 10 gespeichert und somit bereitgehalten.

Figuren 4b und 4c zeigen das Laserentfernungsmessgerät 10 bei Betrieb im ersten Betriebsmodus 102, bei dem die Neigung 32a der Referenz des Gehäuses 12, hier der Seite 34 des Gehäuses 12, ermittelt und an den Benutzer des Laserentfernungsmessgeräts 10 ausgegeben wird. In Figur 4b liegt die Seite 34 (sowie die gestrichelte Verlängerung 34a) des Gehäuses 12 parallel zur Horizontalen 40, angedeutet durch das "Parallel-Symbol" an der gestrichelten Verlängerung 34a der Seite 34 und an der Horizontalen 40. Folglich wird auf dem Bildschirm eine Neigung 32a von "0.0°" angezeigt. In Figur 4c hingegen ist das Laserentfernungsmessgerät 10 geneigt dargestellt, wobei auch die Seite 34 (sowie die gestrichelte Verlängerung 34a) des Gehäuses 12 um die Neigung 32a geneigt zur Horizontalen 40 liegt (Winkelsymbol). In diesem Messszenario wird folglich auf dem Bildschirm eine Neigung 32a von "3.0°" angezeigt. Ferner wird in den Figuren 4b und 4c auf dem Bildschirm ein Symbol 42 ausgegeben, welches signalisiert, dass sich das Laserentfernungsmessgerät 10 im ersten Betriebsmodus 102 befindet (hier dargestellt durch das Symbol "x").

Figuren 4d und 4e zeigen das Laserentfernungsmessgerät 10 bei Betrieb im zweiten Betriebsmodus 104, bei dem die Neigung 32b des Laserstrahls 36 (oder bei ausgeschalteter Laserdiode zumindest die Neigung 32b der theoretischen Emissionsrichtung) des Laserentfernungsmessgeräts 10 ermittelt und an den Benutzer des Laserentfernungsmessgeräts 10 ausgegeben wird. In Figur 4d liegt der Laserstrahl 36 um die Neigung 32b geneigt zur Horizontalen 40 (vgl. Winkelsymbol), da das Gehäuses 12 mit seiner Seite 34 parallel zur Horizontalen 40 ausgerichtet ist. Auf dem Bildschirm wird folglich eine Neigung 32b von "2.5°" angezeigt. In Figur 4e hingegen liegt der emittierte Laserstrahl 36 parallel zur Horizontalen 40 (wieder angedeutet durch das "Parallel-Symbol" an dem Laserstrahl 36 und der Horizontalen 40), sodass auf dem Bildschirm eine Neigung 32b von "0.0°" angezeigt wird. Ferner wird in den Figuren 4d und 4e auf dem Bildschirm ein Symbol 42 ausgegeben, welches signalisiert, dass sich das Laserentfernungsmessgerät 10 im zweiten Betriebsmodus befindet (hier: "y").

Somit wird in Abhängigkeit vom Betriebsmodus des Laserentfernungsmessgeräts 10 entweder die Neigung 32a des Laserentfernungsmessgeräts 10 (z.B. für die Anwendung im Rahmen von Winkelmessungen) oder die Neigung 32b des Laserstrahls 36 (z.B. für die Anwendung im Rahmen von direkten und indirekten Längenmessungen) angezeigt. Je nach gewähltem Betriebsmodus werden die Neigungen entsprechend der gewählten Anwendung konsistent dargestellt. Eine Verwirrung des Benutzers des Laserentfernungsmessgeräts 10 wird folglich vermieden.

## Patentansprüche

1. Verfahren zum Betrieb eines handgehaltenen Laserentfernungsmessgeräts (10) mit einem Gehäuse (12), bei dem mit einer Laserentfernungsmesseinheit des Laserentfernungsmessgeräts (10) eine Entfernung zu einem Zielpunkt durch Aussenden eines Laserstrahls (36) ermittelbar ist und bei dem mit einem Beschleunigungssensor (28) und/oder einem Drehratensensor eine Neigung (32a, 32b) ermittelbar ist, wobei in einem ersten Betriebsmodus (102) des Laserentfernungsmessgeräts (10) die Neigung (32a) einer Referenz des Gehäuses (12), insbesondere einer Seite (34) des Gehäuses (12), des Laserentfernungsmessgeräts (10) ermittelt wird und in einem zweiten Betriebsmodus (104) die Neigung (32b) des Laserstrahls (36) des Laserentfernungsmessgeräts (10) ermittelt wird, wobei zwischen dem ersten Betriebsmodus (102) und dem zweiten Betriebsmodus (104) unter Verwendung einer Eingabevorrichtung (14) des Laserentfernungsmessgeräts (10) umschaltbar ist und die Neigung (32a) der Referenz des Gehäuses (12) oder die Neigung (32b) des Laserstrahls (36) des Laserentfernungsmessgeräts (10) unter Verwendung einer Ausgabevorrichtung (14), insbesondere unter Verwendung eines Bildschirms (14a), des Laserentfernungsmessgeräts (10) ausgegeben wird.

2. Verfahren nach Anspruch 1, **dadurch gekennzeichnet, dass** zwischen dem ersten Betriebsmodus (102) und dem zweiten Betriebsmodus (104) automatisch umschaltbar ist.

3. Verfahren nach Anspruch 2, **dadurch gekennzeichnet, dass** der erste Betriebsmodus (102) automatisch ausgewählt wird, insbesondere von dem zweiten Betriebsmodus (104) in den ersten Betriebsmodus (102) umgeschaltet wird, wenn ein flächiges Auflegen des Laserentfernungsmessgeräts (10) detektiert wird oder das Aufsetzen des Laserentfernungsmessgeräts (10) auf ein Stativ detektiert wird.

4. Verfahren nach einem der Ansprüche 1-3, **dadurch gekennzeichnet, dass** die Neigung (32a, 32b) des Laserentfernungsmessgeräts (10) in Form eines Zahlenwerts, einer Winkelskala oder einer digitalen Wasserwaage ausgegeben wird.

5. Handgehaltenes Laserentfernungsmessgerät (10) zur Durchführung eines Verfahrens nach einem der Ansprüche 1 bis 4, zumindest aufweisend eine Laserentfernungsmesseinheit zum berührungslosen Messen einer Entfernung zu einem Zielpunkt, einen Beschleunigungssensor (28) und/oder einen Drehratensensor zur Ermittlung einer Neigung (32a, 32b) und eine Auswertevorrichtung (26), wobei die Auswertevorrichtung (26) dazu vorgesehen ist, aus einer Entfernungsmessung mittels der Laserentfernungsmesseinheit eine Entfernung zu ermitteln sowie mittels des Beschleunigungssensors (28) und/oder des Drehratensensors ermittelte Neigungen (32a, 32b) wahlweise als Neigung (32a) einer Referenz des Gehäuses (12), insbesondere einer Seite (34) des Gehäuses (12), des Laserentfernungsmessgeräts (10) oder als Neigung (32b) des Laserstrahls (36) des Laserentfernungsmessgeräts (10) zu ermitteln, ferner aufweisend eine Ausgabevorrichtung (14), insbesondere einen Bildschirm (14a), zur Ausgabe der Neigung (32a, 32b) sowie eine Eingabevorrichtung (14) zur Umschaltung zwischen dem ersten Betriebsmodus (102) und dem zweiten Betriebsmodus (104).

## Claims

1. Method for operating a hand-held laser distance measuring device (10) comprising a housing (12), in which a distance to a target point is determinable by a laser distance measuring unit of the laser distance measuring device (10) by means of emission of a laser beam (36) and in which an inclination (32a, 32b) is determinable by an acceleration sensor (28) and/or a rate-of-rotation sensor, wherein the inclination (32a) of a reference of the housing (12), in particular of one side (34) of the housing (12), of the laser distance measuring device (10) is determined in a first operating mode (102) of the laser distance measuring device (10) and the inclination (32b) of the laser beam (36) of the laser distance measuring device (10) is determined in a second operating mode (104), wherein there is switchability between the first operating mode (102) and the second operating mode (104) using an input device (14) of the laser distance measuring device (10) and the inclination (32a) of the reference of the housing (12) or the inclination (32b) of the laser beam (36) of the laser distance measuring device (10) is output using an output device (14), in particular using a screen (14a), of the laser distance measuring device (10).

2. Method according to Claim 1, **characterized in that** there is automatic switchability between the first operating mode (102) and the second operating mode (104).

3. Method according to Claim 2, **characterized in that** the first operating mode (102) is automatically selected, in particular there is switching from the second operating mode (104) to the first operating mode (102), if planar application of the laser distance measuring device (10) is detected or the placement of the laser distance measuring device (10) on a stand is detected.

4. Method according to any of Claims 1-3, **characterized in that** the inclination (32a, 32b) of the laser distance measuring device (10) is output in the form of a numerical value, an angle scale or a digital spirit level.

5. Hand-held laser distance measuring device (10) for carrying out a method according to any of Claims 1 to 4, at least comprising a laser distance measuring unit for non-contact measurement of a distance to a target point, an acceleration sensor (28) and/or a rate-of-rotation sensor for determining an inclination (32a, 32b) and an evaluation device (26), wherein the evaluation device (26) is provided for determining a distance from a distance measurement by means of the laser distance measuring unit and for determining inclinations (32a, 32b) determined by means of the acceleration sensor (28) and/or the rate-of-rotation sensor selectively as inclination (32a) of a reference of the housing (12), in particular of one side (34) of the housing (12), of the laser distance measuring device (10) or as inclination (32b) of the laser beam (36) of the laser distance measuring device (10), furthermore comprising an output device (14), in particular a screen (14a), for outputting the inclination (32a, 32b) and also an input device (14) for switching between the first operating mode (102) and the second operating mode (104).

## Revendications

1. Procédé de fonctionnement d'un dispositif de mesure de distance laser portatif (10) comprenant un boîtier (12), dans lequel une distance d'un point cible peut être déterminée par l'émission d'un faisceau laser (36) au moyen d'une unité de mesure de distance laser du dispositif de mesure de distance laser (10), et dans lequel une inclinaison (32a, 32b) peut être déterminée au moyen d'un capteur d'accélération (28) et/ou d'un capteur de vitesse de rotation, l'inclinaison (32a) d'une référence du boîtier (12), en particulier d'un côté (34) du boîtier (12), du dispositif de mesure de distance laser (10) étant déterminée dans un premier mode de fonctionnement (102) du dispositif de mesure de distance laser (10), et l'inclinaison (32b) du faisceau laser (36) du dispositif de mesure de distance laser (10) étant déterminée dans un second mode de fonctionnement (104), un basculement entre le premier mode de fonctionnement (102) et le second mode de fonctionnement (104) étant possible à l'aide d'un dispositif d'entrée (14) du dispositif de mesure de distance laser (10), et l'inclinaison (32a) de la référence du boîtier (12) ou l'inclinaison (32b) du faisceau laser (36) du dispositif de mesure de distance laser (10) étant délivrée à l'aide d'un dispositif de sortie (14), en particulier à l'aide d'un écran (14a), du dispositif de mesure de distance laser (10).

2. Procédé selon la revendication 1, **caractérisé en ce qu'**il est possible de basculer automatiquement entre le premier mode de fonctionnement (102) et le second mode de fonctionnement (104).

3. Procédé selon la revendication 2, **caractérisé en ce que** le premier mode de fonctionnement (102) est automatiquement sélectionné, en particulier un basculement du second mode de fonctionnement (104) vers le premier mode de fonctionnement (102) est effectué, lorsqu'une pose à plat du dispositif de mesure de distance laser (10) est détectée ou lorsqu'une pose du dispositif de mesure de distance laser (10) sur un trépied est détectée.

4. Procédé selon l'une quelconque des revendications 1 à 3, **caractérisé en ce que** l'inclinaison (32a, 32b) du dispositif de mesure de distance laser (10) est affichée sous la forme d'une valeur numérique, d'une échelle angulaire ou d'un niveau à bulle numérique.

5. Dispositif de mesure de distance laser portatif (10) pour la mise en œuvre d'un procédé selon l'une quelconque des revendications 1 à 4, comprenant au moins une unité de mesure de distance laser pour la mesure sans contact d'une distance d'un point cible, un capteur d'accélération (28) et/ou un capteur de vitesse de rotation pour la détermination d'une inclinaison (32a, 32b), et un dispositif d'évaluation (26), le dispositif d'évaluation (26) étant prévu pour déterminer une distance à partir d'une mesure de distance au moyen de l'unité de mesure de distance laser et pour déterminer des inclinaisons (32a, 32b) détectées au moyen du capteur d'accélération (28) et/ou du capteur de vitesse de rotation, de manière sélective, sous forme d'une inclinaison (32a) d'une référence du boîtier (12), en particulier d'un côté (34) du boîtier (12), du dispositif de mesure de distance laser (10) ou sous forme d'inclinaison (32b) du faisceau laser (36) du dispositif de mesure de distance laser (10),
comprenant en outre un dispositif de sortie (14), en particulier un écran (14a), pour l'affichage de l'inclinaison (32a, 32b) ainsi qu'un dispositif d'entrée (14) pour le basculement entre le premier mode de fonctionnement (102) et le second mode de fonctionnement (104).
